(19) Europäisches Patentamt
European Patent Office
Office européen des brevets

(11) **EP 2 808 314 A1**

(12) **EUROPEAN PATENT APPLICATION**
published in accordance with Art. 153(4) EPC

(43) Date of publication:
**03.12.2014 Bulletin 2014/49**

(51) Int Cl.:
**C04B 35/80** (2006.01)     **C03C 13/00** (2006.01)
**D01F 9/08** (2006.01)     **D04H 1/4209** (2012.01)
**D04H 1/64** (2012.01)

(21) Application number: **12866549.4**

(22) Date of filing: **04.12.2012**

(86) International application number:
**PCT/JP2012/007764**

(87) International publication number:
**WO 2013/111232 (01.08.2013 Gazette 2013/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2012  JP 2012011705**

(71) Applicant: **Nichias Corporation**
**Tokyo 104-8555 (JP)**

(72) Inventors:
• **YONAIYAMA, Ken**
**Tokyo 1048555 (JP)**

• **MIHARA, Tetsuya**
**Tokyo 1048555 (JP)**
• **MURAMATSU, Kouki**
**Tokyo 1048555 (JP)**
• **KISHIKI, Tomohiko**
**Tokyo 1048555 (JP)**

(74) Representative: **Schmitz, Joseph**
**Isler & Pedrazzini AG**
**Postfach 1772**
**8027 Zürich (CH)**

(54) **INORGANIC FIBROUS REGULARLY SHAPED ARTICLE AND METHOD FOR ADJUSTING HARDNESS THEREOF**

(57)   An inorganic fibrous shaped product including organic fiber that includes at least biosoluble inorganic fiber having the following composition and an organic thickener, and including no colloidal silica: [Composition] $SiO_2$: 70 to 82 wt%; CaO: 10 to 29 wt%; MgO: 1 wt% or less; $Al_2O_3$: less than 5 wt%; and the total of $SiO_2$, CaO, MgO and $Al_2O_3$ exceeds 98 wt%.

**Description**

Technical Field

The invention relates to an inorganic fibrous shaped product that can be used as a sealing agent or a packing agent and a method for adjusting the hardness thereof.

Background Art

Inorganic fiber is light in weight, easy to handle, and has excellent heat resistance. Therefore, inorganic fiber is used as a heat-insulating sealing material, for example. On the other hand, in recent years, a problem has been pointed out that inorganic fiber is inhaled by a human body and the inhaled fiber invades the lung. Therefore, biosoluble inorganic fiber that does not cause or hardly cause problems even if inhaled by a human body has been developed (Patent Documents 1 and 2, for example).

According to applications, biosoluble inorganic fiber is not only used as the raw material of textiles such as a rope, a yarn and a cloth, but also secondarily processed to and used as a shaped product such as a blanket, a board and a felt or an unshaped product such as a coating material and mortar.

When a shaped product is used as a joint filler in a heat-treatment apparatus, an industrial furnace or an incinerator, a joint filler that fills a gap of refractory tiles, heat-insulating bricks, shells and refractory mortars, a sealing material, and a packing material, flexibility and cushion properties are required such that construction of joints can be conducted without forming gaps. When construction is carried out on a curved surface or the like, since a shaped product is applied after processing variously, in addition to flexibility, hardness is required for the need of attaining working accuracy or dimensional accuracy. As mentioned above, flexibility and hardness are required according to applications. Further, in order not to be deformed during use at high temperatures, it is preferred that a shaped product have a small heat shrinkage.

A conventional shaped product such as a board contains an inorganic binder (colloidal silica) in order to allow it to be hard. However, if colloidal silica is contained, when a shaped product is used at high temperatures, a problem arises that strength is lowered or cushion properties are deteriorated due to advancement in crystallization. Further, there is a problem that, due to deterioration in flexibility, a.shaped product cannot retain its shape after construction, and as a result, it drops from the location of construction or a gap is formed between the location of construction and the shaped product.

Related Art Documents

Patent Documents

Patent Document 1: JP-A-2001-270737
Patent Document 2: JP-T-2005-514318

Summary of the Invention

An object of the invention is to provide an inorganic fibrous shaped product that does not contain colloidal silica and has various degrees of flexibility and hardness, and heat resistance, and a method for adjusting the hardness thereof.

According to the invention, the following method for adjusting the hardness of an inorganic fibrous shaped product can be provided.

1. An inorganic fibrous shaped product comprising organic fiber that comprises biosoluble inorganic fiber having at least the following composition and an organic thickener, and comprising no colloidal silica: [Composition]
$SiO_2$: 70 to 82 wt%;
CaO: 10 to 29 wt%;
MgO: 1 wt% or less;
$Al_2O_3$: less than 5 wt%; and
the total of $SiO_2$, CaO, MgO and $Al_2O_3$ exceeds 98 wt%.
2. The inorganic fibrous shaped product according to 1, further comprising a fixing agent.
3. The inorganic fibrous shaped product according to 2, wherein the fixing agent is one or more selected from sulfates, nitrates, acetates and hydrochlorides of each of aluminum, magnesium, calcium, sodium and potassium.

4. A method for adjusting the hardness of the surface of the inorganic fibrous shaped product according to any of 1 to 3, wherein the amount of at least one of an organic thickener and a fixing agent is changed.

According to the invention, it is possible to provide an inorganic fibrous shaped product that does not contain colloidal silica and has various degrees of flexibility and hardness, and heat resistance, and to provide a method for adjusting the hardness thereof.

Mode for Carrying out the Invention

The inorganic fibrous shaped product of the invention at least comprises prescribed inorganic fiber (hereinafter may often referred to as the "specific inorganic fiber") and an organic thickener. The inorganic fibrous shaped product of the invention does not contain colloidal silica. Further, the inorganic fibrous shaped product of the invention does not have to contain a metal alkoxide, a glass raw material composition (borosilicate glass, frit 3249 (manufactured by Ferro Corporation: 3.5% CaO; 12.2% MgO; 28.9% $B_2O_3$; 13.3% $Al_2O_3$; and 42.1% $SiO_2$) or the like), a sol (alumina borate sol or the like), and an inorganic binder such as an acid alumina phosphate does not have to be contained. Further, a thermosetting resin such as a phenol resin and an epoxy resin does not have to be contained.

Organic thickeners include a natural thickener and its derivative or a vinyl-based, vinylidene-based, polyester-based, polyamide-based, polyether-based, polyglycol-based, polyvinyl alcohol-based, polyalkylene oxide-based and polyacrylic acid-based thickeners. Specific examples thereof include cellulose-based thickeners such as CMC (carboxymethyl cellulose), MC (methyl cellulose), albumin, casein, alginic acid, agar, starch, polysaccharide, PVA (polyvinyl alcohol), PVB (polyvinyl butyral), acrylic emulsion or the like. These may be used alone or in combination of two or more. A polyacrylic acid-based thickener, a cellulose-based thickener and starch are preferable. The shaped product of the invention may contain an organic thickener in a substantially un-molten state.

The inorganic fibrous shaped product of the invention may further contain a fixing agent in order to allow an organic thickener to be fixed to fibers. As examples of the fixing agent, sulfates, nitrates, acetates and hydrochlorides of each of aluminum, magnesium, calcium, sodium and potassium can be given.

In order to allow flocs to be formed in a slurry, a flocculant may be contained. A general-purpose flocculant may be used, and the type and amount may appropriately be selected according to the state of the resulting flocs. Flocculants are not necessarily be contained.

The specific inorganic fiber used in the invention has the following composition. The fiber having the following composition has excellent biosolubility and fire resistance after heating.

$SiO_2$: 66 to 82 wt%
CaO: 10 to 34 wt%
MgO: 3 wt% or less
$Al_2O_3$: 5 wt% or less

The total of $SiO_2$, CaO, MgO and $Al_2O_3$ exceeds 98 wt%.

The following composition can preferably be exemplified.

$SiO_2$: 66 to 82 wt% (it can be 68 to 80 wt%, 70 to 80 wt%, 71 to 80 wt% or 71 to 76 wt%, for example)
CaO: 10 to 34 wt% (it can be 20 to 30 wt% or 21 to 26 wt%, for example)
MgO: 3 wt% or less (it can be 1 wt% or less, for example)
$Al_2O_3$: 5 wt% or less (it can be 3.5 wt% or less or 3 wt% or less, or it can be 1 wt% or more or 2 wt% or more, for example)
Other oxides: less than 2 wt%

If $SiO_2$ is contained in the above-mentioned amount range, the inorganic fiber has excellent heat resistance. If CaO and MgO are contained in the above-mentioned amount range, the inorganic fiber has excellent biosolubility before and after heating.

The $Al_2O_3$ content can be 3.4 wt% or less or 3.0 wt% or less, for example, or it can be 1.1 wt% or more and 2.0 wt% or more. The $Al_2O_3$ content is preferably 0 to 3 wt%, more preferably 1 to 3 wt%. If $Al_2O_3$ is contained in this amount range, a higher strength can be achieved.

The above-mentioned inorganic fiber may contain, as other oxides, one or more selected from alkali metal oxides ($K_2O$, $Na_2O$ or the like), $Fe_2O_3$, $ZrO_2$, $P_2O_5$, $B_2O_3$, $TiO_2$, MnO, $R_2O_3$ (R is selected from Sc, La, Ce, Pr, Nd, Sm, Eu, Gd, Tb, Dy, Ho, Er, Tm, Yb, Lu, Y or a mixture thereof) or the like. They need not be contained. The content of each of other oxides may be less than 1.0 wt%, 0.2 wt% or less or 0.1 wt% or less. As for the alkali metal oxide, the content of each oxide may be less than 1.0 wt% or 0.2 wt% or less, and the total of alkali metal oxides may be less than 1.0 wt% or 0.2 wt% or less.

The total content of $SiO_2$, CaO, MgO and $Al_2O_3$ may exceed 99 wt%.

The fiber having the above-mentioned composition is biosoluble. In general, biosoluble fiber is fiber having a physiological saline dissolution ratio at 40°C of 1% or more.

The physiological saline dissolution ratio is measured by the following method, for example. Specifically, first, 1 g of the sample obtained by pulverizing inorganic fibers to 200 meshes or less and 150 mL of physiological saline are put in a conical flask (volume: 300 mL). This flask is placed in an incubator of 40°C, and a horizontal vibration (120 rpm) is continuously applied for 50 hours. Thereafter, the concentration (mg/L) of each element contained in a filtrate obtained by filtration is measured by an ICP emission spectrometry apparatus. Based on the measured concentration of each element and the content (wt%) of each element in inorganic fiber before dissolution, the physiological saline dissolution ratio (%) is calculated. That is, if the measurement elements are silicon (Si), magnesium (Mg), calcium (Ca) and aluminum (Al), the physiological saline dissolution ratio C(%) is calculated in accordance with the following formula: C(%)=[Amount of filtrate (L)×(a1+a2+a3+a4)×100]/[Weight (mg) of inorganic fiber before dissolution ×(b1+b2+b3+b4)/100]. In this formula, a1, a2, a3 and a4 are respectively the measured concentration (mg/L) of silicon, magnesium, calcium and aluminum and b1, b2, b3 and b4 are respectively the content (wt%) of silicon, magnesium, calcium and aluminum in the inorganic fiber before dissolution.

As the method for producing the above-mentioned inorganic fiber, known methods such as the blowing method and the spinning method can be mentioned.

The inorganic fibrous shaped product may contain other inorganic fiber in addition to the above-mentioned specific inorganic fiber. Among 100 parts by weight of the inorganic fiber, the content of the specific inorganic fiber may be 50 wt% or more, 60 wt% or more, 80 wt% or more or 100 wt%.

Refractory fiber composed mainly of silica and alumina (silica: 4 to 60 wt%, alumina: 40 to 96 wt%), rock wool (for example, the $SiO_2$ content is 30 to 50 mass%, the $Al_2O_3$ content is 10 to 20 mass%, the MgO content is 1 to 10 mass%, the CaO content is 20 to 40 mass%, the $Fe_2O_3$ content is 0 to 3 mass% and the MnO content is 0 to 1 mass%), carbon fiber, slag wool, glass wool, silica fiber, silicon carbide fiber, boron nitride fiber, zirconia fiber, calcium silicate fiber, and other natural mineral fiber can be given.

The inorganic fibrous shaped product may contain inorganic powder, anti-foaming agents, pH-adjusting agents or the like.

The content of an organic thickener is normally 0.01 to 60 parts by weight, preferably 0.1 to 30 parts by weight, more preferably 0.5 to 20 parts by weight, and further preferably 1 to 15 parts by weight, when the total content of all of the inorganic fiber contained in the shaped product is taken as 100 parts by weight. If the content of an organic thickener is 60 parts by weight or more, dehydration forming becomes difficult. If the shaped product is used at high temperatures, organic components may cause a gas to be generated. Therefore, the content of an organic thickener may be appropriately adjusted such that the inorganic fibrous shaped product can exhibit its function or can satisfy required properties according to applications.

A fixing agent may normally be contained in an amount of 0 to 10, preferably 0.5 to 10, and more preferably 1 to 7, if the content of an organic thickener is taken as 1. In the shaped product of the invention, a fixing agent is normally contained in an amount of 0 to 20 parts by weight, preferably 0.01 to 15 parts by weight, more preferably 0.5 to 10 parts by weight and further preferably 1 to 10 parts by weight, if the total content of the inorganic fiber is taken as 100 parts by weight. The total of an organic thickener and a fixing agent is preferably 0.1 to 30 wt%, preferably 1 to 20 wt%, preferably 1 to 15 wt% and preferably 1 to 10 wt%.

The organic fibrous shaped product may be configured such that the total content of the inorganic fiber and the organic thickener (if organic powder and/or a fixing agent are contained, the total content of the inorganic fiber, the organic thickener, the inorganic powder and the fixing agent) becomes 90 wt% or more, 95 wt% or more, 98 wt% or more, 99 wt% or more or 100 wt%.

The inorganic fibrous shaped product is preferably in the shape of a fabric such as a felt or in the shape of a flexible sheet. The shaped product such as a felt can be used as a single body without the need of scattering, applying or stacking other materials on the surface thereof. The shaped product having flexibility or cushion properties can change its form easily, and therefore, can be pushed into a gap between joints easily, for example. The thickness is not particularly restricted, but is normally 5 mm or more, preferably 10 to 50 mm.

The hardness and flexural strength of the inorganic fibrous shaped product of the invention can be appropriately adjusted according to applications by changing the amount of an organic thickener and/or a fixing agent. With an increase in the amount of an organic thickener and a fixing agent, the organic fibrous shaped product has higher hardness.

The surface hardness of the inorganic fibrous shaped product in the normal state (unheated) varies depending on the application, but is normally 1 to 60°. The method for measuring the surface hardness is described in the Examples.

Further, a flexural strength in the normal state of 0.03 to 0.6 Mpa is preferable since the handling properties and the working accuracy of the inorganic fibrous shaped product are improved. The method for measuring the flexural strength is described in the Examples.

The heat shrinkage of the inorganic fibrous shaped product after heating at 1100°C for 24 hours is preferably 2% or less, more preferably 1% or less. The heat shrinkage can be further lowered by using the above-mentioned specific inorganic fiber having a low heat shrinkage and by appropriately combining an organic thickener and a fixing agent. The method for measuring the heat shrinkage is described in the Examples.

The shaped product can be produced by a known method such as dehydration forming or the like. For example, it can be produced by a method in which a raw material containing the inorganic fiber and an organic thickener and a dispersion medium are mixed to form a slurry, the slurry is flown in a die to conduct forming, and the formed product is dried. Drying is preferably conducted at a temperature that is not higher than the melting temperature. The shaped product of the invention can be produced by using a used shaped product. However, since it is difficult to control the amount of an organic substance, normally, a used shaped product is not used. If the amount of an organic substance is large, a large amount of gas is generated when heating.

When dehydration forming is conducted, a slurry is produced by mixing components with a solvent. The amount of a solvent is normally 1000 to 100000 parts by weight, preferably 1500 to 80000 parts by weight, and further preferably 2000 to 60000 parts by weight, when the total amount of all inorganic fiber contained in the shaped product is taken as 100 parts by weight.

Normally, water is used as the solvent. A polar organic solvent may be used, or may be added partially, but water is preferable as the solvent. As for water, one that is normally used on the industrial basis may be used, and examples of usable water include distilled water, ion exchange water, tap water, groundwater and industrial water.

EXAMPLES

Examples 1 to 16

(1) Production of felt

Inorganic fiber A comprising 73 mass% of $SiO_2$, 24 mass% of CaO, 0.3 mass% of MgO and 2 mass% of $Al_2O_3$ and an organic thickener selected from CMC (organic thickener), starch (organic thickener) and an acrylic emulsion (organic thickener) were mixed with water in amounts shown in Tables 1 to 3, whereby a raw material slurry was prepared. As for CMC or starch, the concentration of solid matters had been adjusted to 0.5 to 5% in advance, and CMC or starch was added in the state where it was fully dissolved or swollen in water.

In Tables 1 to 3, as for the amount of components other than the inorganic fiber, the amount is indicated in terms of part by weight when the amount of the inorganic fiber A is taken as 100 parts by weight. Water was used in an amount of 3000 parts by weight when the amount of the inorganic fiber A is taken as 100 parts by weight.

This raw material slurry was flown in a forming die in which a net was provided in the bottom part thereof. The water contained in the raw material slurry was sucked and removed through the net of the forming die. Thereafter, the dehydrated raw material was dried by heating in a drier, whereby felts each having a thickness of 25 mm were obtained.

(2) Evaluation of felt

The following evaluation was conducted for the resulting felts. The results are shown in Tables 1 to 3.

(i) Heat shrinkage

A sample (length: 150 mm, width: 50 mm) taken out from the felt was fired at 1100°C for 24 hours. Before and after the firing, the length in the longitudinal direction was measured, and the heat shrinkage was obtained according to the following formula:

$$[(\text{Measured value before heating} - \text{Measured value after heating})/\text{Measured value before heating}] \times 100$$

(ii) Flexural strength

For a sample (length: 150 mm, width: 50 mm) taken out from the felt, the breaking load thereof was measured by using a three-point bending testing machine (Tensilon). The flexural strength was calculated according to the following formula:

Bending strength (MPa) = {3 x maximum load (N) x distance (mm) between the centers of support rolls} / {2 x width (mm) of insulating material x (thickness (mm) of insulating material)$^2$}

(iii) Hardness

The pressure surface of an Asker Durometer Type C was brought in contact with the surface of the felt that was held horizontally such that the indenter point of the durometer became vertical to the felt surface. The scale of the durometer was immediately read. An average value of measurement values at 5 locations was taken as the hardness (° ) of the test piece.

Table 1

| | | Example 1 | Example 2 | Example 3 | Example 4 | Example 5 | Example 6 |
|---|---|---|---|---|---|---|---|
| Inorganic fiber | Inorganic fiber A | 100 | 100 | 100 | 100 | 100 | 100 |
| Organic thickener | CMC | 1 | 3 | 5 | 7 | 10 | 15 |
| | Starch | | | | | | |
| | Acrylic emulsion | | | | | | |
| Fixing agent | Aluminum sulfate | | | | | | |
| Heat shrinkage | 1100°C×24hr | 0.20 | 0.00 | 0.60 | 0.40 | 0.5 | 0.4 |
| Flexural strength | Unheated | 0.03 | 0.02 | 0.04 | 0.07 | 0.1 | 0.2 |
| Hardness | Surface | 3 | 15 | 23 | 25 | 35 | 50 |

Table 2

| | | Example 7 | Example 8 | Example 9 | Example 10 | Example 11 |
|---|---|---|---|---|---|---|
| Inorganic fiber | Inorganic fiber A | 100 | 100 | 100 | 100 | 100 |
| Organic thickener | CMC | 5 | 5 | 5 | 5 | 5 |
| | Starch | 1 | 3 | 5 | 7 | 10 |
| | Acrylic emulsion | | | | | |
| Fixing agent | Aluminum sulfate | | | | | |
| Heat shrinkage | 1100°C×24hr | 1.6 | 1.2 | 1.2 | 1.4 | 1.5 |
| Flexural strength | Unheated | 0.04 | 0.05 | 0.03 | 0.05 | 0.06 |
| Hardness | Surface | 5 | 6 | 11 | 13 | 15 |

Table 3

| | | Example 12 | Example 13 | Example 14 | Example 15 | Example 16 |
|---|---|---|---|---|---|---|
| Inorganic fiber | Inorganic fiber A | 100 | 100 | 100 | 100 | 100 |
| Organic thickener | CMC | 5 | 5 | 5 | 5 | 5 |
| | Starch | | | | | |
| | Acrylic emulsion | 1 | 3 | 5 | 7 | 10 |
| Fixing agent | Aluminum sulfate | | | | | |
| Heat shrinkage | 1100°C×24hr | 1.2 | 1.2 | 1.2 | 1.2 | 0.6 |
| Flexural strength | Unheated | 0.05 | 0.13 | 0.17 | 0.2 | 0.24 |
| Hardness | Surface | 8 | 12 | 28 | 32 | 40 |

Comparative Examples 1 to 3

The components shown in Table 4 were mixed in amounts shown in Table 4. The mixture was subjected to dehydration forming to produce formed bodies (board) each having a thickness of 25 mm. Evaluation was conducted in the same manner as in Example 1. The results are shown in Table 4.

The inorganic fiber B comprises 53 mass% of $SiO_2$ and 47 mass% of $Al_2O_3$.

Table 4

| | | Com. Ex. 1 | Com. Ex. 2 | Com. Ex. 3 |
|---|---|---|---|---|
| Inorganic fiber | Inorganic fiber A | 100 | | 100 |
| | Inorganic fiber B | | 100 | |
| Organic thickener | CMC | | | |
| | Starch | 3 | 4.5 | 4.5 |
| Inorganic binder | Colloidal silica | 10 | 5 | 5 |
| Fixing agent | Aluminum sulfate | | | |
| Flocculant | | 2 | 0.5 | 0.5 |
| Heat shrinkage | 1100°C×24hr | 1.00 | 3 | 2.1 |
| Flexural strength | Unheated | 0.80 | 0.5 | 0.5 |
| Hardness | Surface | 55 | 50 | 50 |

Examples 17 to 36

The components shown in Tables 5 and 6 were mixed in amounts shown in Tables 5 and 6. Felts each having a thickness of 25 mm were produced and evaluated in the same manner as in Example 1. The results are shown in Tables 5 and 6.

Table 5

| | | Example 17 | Example 18 | Example 19 | Example 20 | Example 21 | Example 22 | Example 23 | Example 24 |
|---|---|---|---|---|---|---|---|---|---|
| Inorganic fiber | Inorganic fiber A | 100 | 100 | 100 | 100 | 100 | 100 | 100 | 100 |
| Organic thickener | CMC | 5 | 5 | 5 | 5 | 5 | 5 | 5 | 5 |
| | Starch | | | | | | | | |
| | Acrylic emulsion | | | | | | | | |
| Fixing agent | Aluminum sulfate | 0 | 0.25 | 0.5 | 1 | 2 | 3 | 4 | 5 |
| Heat shrinkage | 1100°C×24hr | 1.02 | 1.05 | 0.79 | 0.82 | 0.59 | 0.61 | 0.68 | 0.77 |
| Flexural strength | Unheated | 0.03 | 0.06 | 0.07 | 0.07 | 0.21 | 0.25 | 0.38 | 0.4 |
| Hardness | Surface | 4 | 6 | 8 | 9 | 35 | 32 | 33 | 45 |

| | | Example 25 | Example 26 | Example 27 | Example 28 | Example 29 | Example 30 | Example 31 | Example 32 |
|---|---|---|---|---|---|---|---|---|---|
| Inorganic fiber | Inorganic fiber A | 100 | 100 | 100 | 100 | 100 | 100 | 100 | 100 |
| Organic thickener | CMC | 3 | 3 | 3 | 3 | 1 | 1 | 1 | 1 |
| | Starch | | | | | | | | |
| | Acrylic emulsion | | | | | | | | |
| Fixing agent | Aluminum sulfate | 1.8 | 4 | 6 | 7 | 0.5 | 1 | 2 | 3 |
| Heat shrinkage | 1100°C×24hr | 0.58 | 1.13 | 0.60 | 0.62 | -0.27 | 0.25 | 0.73 | 0.67 |
| Flexural strength | Unheated | 0.19 | 0.33 | 0.47 | 0.50 | 0.02 | 0.03 | 0.04 | 0.04 |
| Hardness | Surface | 23 | 35 | 40 | 48 | 2 | 1 | 4 | 5 |

EP 2 808 314 A1

Table 6

| | Composition | Example 33 | Example 34 | Example 35 | Example 36 |
|---|---|---|---|---|---|
| Inorganic fiber | Inorganic fiber A | 100 | 100 | 100 | 100 |
| Organic thickener | CMC | 5 | 5 | 5 | 3 |
| | Starch | | | | |
| | Acrylic emulsion | | | | |
| Fixing agent | Aluminum nitrate | 1 | 2 | 3 | 2 |
| Heat shrinkage | 1100°C×24hr | 0.76 | 0.78 | 0.73 | 0.89 |
| Flexural strength | Unheated | 0.12 | 0.31 | 0.49 | 0.14 |
| Hardness | Surface | 19 | 38 | 45 | 21 |

From Tables 1 to 6, it can be understood that the felts of the Examples can have appropriate values of heat shrinkage, flexural strength and hardness without using an inorganic binder. The heat shrinkage of the felts is equivalent to or smaller than that of the boards, and the flexural strength (flexibility) of the felts is equivalent to or smaller than that of the boards. Further, it can be understood that the hardness of the felt can be increased to a level that is equal to that of the board by increasing the amount of an organic thickener or the amount of a fixing agent and an organic thickener.

Industrial Applicability

The inorganic fibrous shaped product of the invention can be used in various applications as a joint filler in a heat treatment apparatus, an industrial kiln or an incinerator; a joint filler that fills a gap of refractory tiles, heat-insulting bricks, shells and refractory mortars, a sealing material, a packing material, a heat insulating material or an alternative to asbestos.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in this specification and the Japanese application specification claiming priority under the Paris Convention are incorporated herein by reference in its entirety.

**Claims**

1. An inorganic fibrous shaped product comprising organic fiber that comprises at least biosoluble inorganic fiber having the following composition and an organic thickener, and comprising no colloidal silica: [Composition]
$SiO_2$: 70 to 82 wt%;
CaO: 10 to 29 wt%;
MgO: 1 wt% or less;
$Al_2O_3$: less than 5 wt%; and
the total of $SiO_2$, CaO, MgO and $Al_2O_3$ exceeds 98 wt%.

2. The inorganic fibrous shaped product according to claim 1, further comprising a fixing agent.

3. The inorganic fibrous shaped product according to claim 2, wherein the fixing agent is one or more selected from sulfates, nitrates, acetates and hydrochlorides of each of aluminum, magnesium, calcium, sodium and potassium.

4. A method for adjusting the hardness of the surface of the inorganic fibrous shaped product according to any of claims 1 to 3, wherein the amount of at least one of an organic thickener and a fixing agent is changed.

## INTERNATIONAL SEARCH REPORT

| International application No. |
| --- |
| PCT/JP2012/007764 |

A. CLASSIFICATION OF SUBJECT MATTER
*C04B35/80*(2006.01)i, *C03C13/00*(2006.01)i, *D01F9/08*(2006.01)i, *D04H1/4209*(2012.01)i, *D04H1/64*(2012.01)i

According to International Patent Classification (IPC) or to both national classification and IPC

B. FIELDS SEARCHED

Minimum documentation searched (classification system followed by classification symbols)
C04B35/80, C03C13/00, D01F9/08, D04H1/4209, D04H1/64

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2005-514318 A (The Morgan Crucible Company PLC), 19 May 2005 (19.05.2005), claims; tables 1-1, 1-2; paragraphs [0001], [0027] & US 2004/0254056 A1 & US 2005/0233887 A1 & US 2009/0127489 A1 & GB 2383793 A & GB 200162 D0 & EP 1474366 A & EP 1544177 A2 & WO 2003/059835 A1 & DE 60301263 D & DE 60318866 D & CA 2470642 A & BR 306631 A & AT 301622 T & ES 2243884 T & PL 373871 A | 1 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 January, 2013 (09.01.13) | 22 January, 2013 (22.01.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/007764

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-515307 A (Unifrax Corp.),<br>26 May 2005 (26.05.2005),<br>claims; table 3; paragraphs [0001], [0011]<br>& US 2003/0162019 A1    & EP 1463776 A<br>& WO 2003/060016 A1    & BR 302547 A<br>& CA 2472080 A    & PL 371218 A<br>& CN 1639267 A    & RU 2004123456 A<br>& ZA 200405255 A    & AU 2003235668 A<br>& MX PA04006718 A | 1-4 |
| Y | JP 2008-162853 A (Nichias Corp.),<br>17 July 2008 (17.07.2008),<br>claims; paragraphs [0015], [0026]<br>(Family: none) | 1-4 |
| Y | JP 2007-197264 A (Nichias Corp.),<br>09 August 2007 (09.08.2007),<br>claims; paragraph [0037]<br>(Family: none) | 2,3 |
| Y | JP 2006-28649 A (Asahi Fiber Glass Co., Ltd.),<br>02 February 2006 (02.02.2006),<br>claims; paragraph [0056]<br>(Family: none) | 4 |

Form PCT/ISA/210 (continuation of second sheet) (July 2009)

## REFERENCES CITED IN THE DESCRIPTION

**Patent documents cited in the description**

- JP 2001270737 A

- JP 2005514318 T